(19) Europäisches Patentamt

European Patent Office

Office européen des brevets

(11) **EP 4 597 425 A1**

(12) **EUROPEAN PATENT APPLICATION**
published in accordance with Art. 153(4) EPC

(43) Date of publication:
**06.08.2025 Bulletin 2025/32**

(21) Application number: **23871898.5**

(22) Date of filing: **12.09.2023**

(51) International Patent Classification (IPC):
**G06T 7/143** (2017.01)   **G06V 10/764** (2022.01)

(52) Cooperative Patent Classification (CPC):
**G06T 7/143; G06V 10/764**

(86) International application number:
**PCT/JP2023/033223**

(87) International publication number:
**WO 2024/070665 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 JP 2022153069**

(71) Applicant: **FUJIFILM Corporation
Tokyo 106-8620 (JP)**

(72) Inventors:
• **IHARA, Satoshi
Tokyo 106-8620 (JP)**
• **FUKUMOTO, Mitsuki
Tokyo 106-8620 (JP)**

(74) Representative: **Meissner Bolte Partnerschaft
mbB
Patentanwälte Rechtsanwälte
Postfach 86 06 24
81633 München (DE)**

(54) **IMAGE PROCESSING DEVICE, IMAGE PROCESSING METHOD, AND PROGRAM**

(57)    An image processing apparatus has at least one processor. The at least one processor is configured to perform division processing of dividing an image into a plurality of partial images, the division processing being processing of dividing the image such that each of the plurality of partial images has an overlapping area that overlaps another partial image adjacent to the partial image at an edge part of the partial image; perform, individually for each of the plurality of partial images, calculation processing of calculating numerical values for respective pixels of the partial image, the numerical values being for use in class classification and each being related to a probability of a corresponding pixel among the pixels belonging to a specific class; and perform integration processing of integrating the numerical values individually calculated for the plurality of partial images to achieve a size which the image had before the division processing.

FIG. 5

**Description**

**BACKGROUND OF THE INVENTION**

1. Field of the Invention

The disclosed technology relates to an image processing apparatus, an image processing method, and a program.

2. Description of the Related Art

Techniques below are known as techniques related to image processing. JP2020-16928A reveals an image processing apparatus including a likelihood calculation unit, a separability calculation unit, a conversion unit, and a combination unit. The likelihood calculation unit calculates a likelihood indicating a possibility that a region included in a target image is a region representing a structure. The separability calculation unit calculates a separability indicating ease of separation between the region representing the structure and a region representing a non-structure, based on a statistical quantity of the likelihood. The conversion unit converts the target image to generate a new target image for which the likelihood is to be calculated, if the separability is smaller than a first threshold value. The combination unit generates a combined likelihood by combining the likelihoods calculated for the respective target images.

JP2021-149473A describes an image processing apparatus having a division unit, a training unit, and a restoration unit. The division unit divides high-quality images and low-quality images into a plurality of regions. The training unit trains each of a plurality of learning models on pairs of a low-quality image and a high-quality image for a corresponding one of the divided regions. The restoration unit divides a restoration-target low-quality image using the same method as that of the division unit, inputs the individual divided regions into the respective learning models, and restores the restoration-target low-quality image based on high-quality images output from the respective learning models.

JP2020-160997A describes an image processing apparatus including an acquisition unit, a patch image generation unit, a label assigning unit, and a pseudo image generation unit. The acquisition unit acquires a training image. The patch image generation unit generates a plurality of training patch images from the training image. The label assigning unit assigns a label to each of the plurality of training patch images in accordance with a preset label assignment condition. The pseudo image generation unit trains a neural network that receives the training patch image and the label as inputs and generates a pseudo image that is the restored training patch image.

**SUMMARY OF THE INVENTION**

Segmentation, known as an image recognition technique, includes, for example, processing of performing class classification on all images constituting an image. Segmentation can be implemented using a convolutional neural network (CNN). If the size of an image input to the CNN is excessively large, computational resources such as a memory may be insufficient. Therefore, a method of dividing an image into a plurality of partial images, performing segmentation for each of the partial images, and integrating the respective results is conceivable.

On the other hand, in segmentation using the CNN, the classification accuracy tends to be lower in the vicinity of an edge part of an image than in a central part of the image. This is because class classification is performed by taking surrounding pixels of a target pixel into consideration. To avoid this issue, it is conceivable to perform image division such that each partial image has an overlapping portion (hereinafter, referred to as an overlapping area) that overlaps another partial image adjacent to the partial image at an edge part, and for the overlapping area of the partial images, perform class classification using a classification label (e.g., "0" or "1") obtained individually for each of the plurality of partial images that form the overlapping area. That is, the classification labels individually obtained for the plurality of partial images are integrated to achieve a size of the original image. With this approach, processing of merely selectively using one of the classification labels individually obtained for the plurality of partial images that form the overlapping area can be performed for the overlapping area. Thus, the effect of improving the accuracy of class classification in the vicinity of the edge part of the image is limited. As a result, in a label map obtained by integrating the segmentation results of the respective partial images, a low-accuracy region appears in the vicinity of boundaries between the partial images, resulting in an inaccurate and unnatural outcome. That is, with the method of integrating the classification labels individually obtained for the plurality of partial images to achieve the size of the original image, obtaining accurate and natural segmentation results may be difficult because of an insufficient information amount of the classification labels.

The disclosed technology is made in view of the foregoing and aims to increase the accuracy of class classification in image processing for class classification that includes processing on a plurality of partial images obtained by dividing an image.

An image processing apparatus according to the disclosed technology has at least one processor. The at least one processor is configured to perform division processing of dividing an image into a plurality of partial images, the division processing being processing of dividing the image such that each of the plurality of partial images has an overlapping area that overlaps another partial image adjacent to the partial image at an edge part of the partial image; perform, individually for each of the plurality of partial images, calculation processing of calculating numerical values for respective pixels of the partial image, the numerical values being for use in class classification and each being related to a probability of a corresponding pixel among the pixels belonging to a specific class; and perform integration processing of integrating the numerical values individually calculated for the plurality of partial images to achieve a size which the image had before the division processing.

Each of the numerical values for use in class classification may be the probability of the corresponding pixel belonging to the specific class or a logit of the probability.

The at least one processor may be configured to perform, in the integration processing, arithmetic processing in which the numerical values in a common overlapping area of a plurality of partial images that form the common overlapping area are an arithmetic operation target. The at least one processor may be configured to perform processing of calculating a statistical value of the numerical values that are the arithmetic operation target. The at least one processor may be configured to perform an arithmetic operation based on pixel positions, on the numerical values that are the arithmetic operation target. The at least one processor may be configured to perform processing of calculating a weighted average using weight coefficients based on the pixel positions, on the numerical values that are the arithmetic operation target.

The at least one processor may be configured to perform the class classification on the image, based on an integrated value obtained by integrating the numerical values in the integration processing. The at least one processor may be configured to perform the class classification using an Argmax function or a threshold value, based on the integrated value.

An image processing method according to the disclosed technology is an image processing method to be executed by at least one processor which an image processing apparatus has, the image processing method including: performing division processing of dividing an image into a plurality of partial images, the division processing being processing of dividing the image such that each of the plurality of partial images has an overlapping area that overlaps another partial image adjacent to the partial image at an edge part of the partial image; performing, individually for each of the plurality of partial images, calculation processing of calculating numerical values for respective pixels of the partial image, the numerical values being for use in class classification and each indicating a probability of a corresponding pixel among the pixels belonging to a specific class; performing, individually for each of the plurality of partial images, calculation processing of calculating numerical values for respective pixels of the partial image, the numerical values being for use in class classification and each being related to a probability of a corresponding pixel among the pixels belonging to a specific class; and performing integration processing of integrating the numerical values individually calculated for the plurality of partial images to achieve a size which the image had before the division processing.

A program according to the disclosed technology is a program for causing at least one processor which an image processing apparatus has to execute: division processing of dividing an image into a plurality of partial images, the division processing being processing of dividing the image such that each of the plurality of partial images has an overlapping area that overlaps another partial image adjacent to the partial image at an edge part of the partial image; individually for each of the plurality of partial images, calculation processing of calculating numerical values for respective pixels of the partial image, the numerical values being for use in class classification and each indicating a probability of a corresponding pixel among the pixels belonging to a specific class; and integration processing of integrating the numerical values individually calculated for the plurality of partial images to achieve a size which the image had before the division processing.

The disclosed technology can increase the accuracy of class classification in image processing for class classification that includes processing on a plurality of partial images obtained by dividing an image.

## BRIEF DESCRIPTION OF THE DRAWINGS

Fig. 1 is a diagram illustrating an example of a hardware configuration of an image processing apparatus according to an embodiment of the disclosed technology;

Fig. 2 is a functional block diagram illustrating an example of a functional configuration of the image processing apparatus according to the embodiment of the disclosed technology;

Fig. 3A is a diagram illustrating an example of a manner of division processing according to the embodiment of the disclosed technology;

Fig. 3B is a diagram illustrating an example of a manner of division processing according to the embodiment of the disclosed technology;

Fig. 4 is a diagram illustrating an example of a manner of division processing according to the embodiment of the disclosed technology;

Fig. 5 is a diagram illustrating a concept of integration processing according to the embodiment of the disclosed technology; and

Fig. 6 is a flowchart illustrating an example of a flow of image processing according to the embodiment of the disclosed technology.

## DESCRIPTION OF THE PREFERRED EMBODIMENTS

Hereinafter, an example of an embodiment of the disclosed technology will be described with reference to the drawings. In the drawings, the same or equivalent components and parts are denoted by the same reference signs, and redundant descriptions will be omitted.

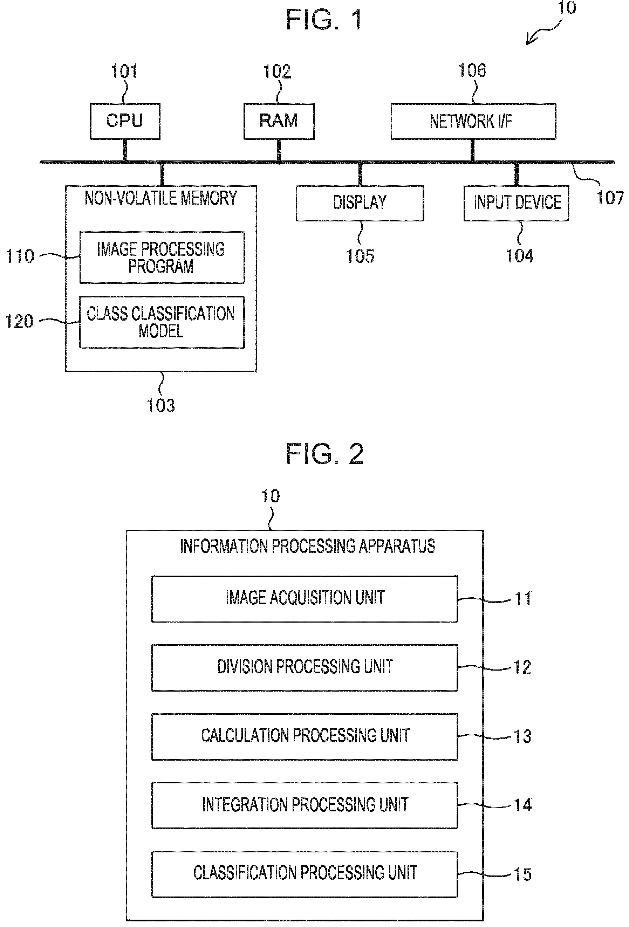

Fig. 1 is a diagram illustrating an example of a hardware configuration of an image processing apparatus 10 according to an embodiment of the disclosed technology. The image processing apparatus 10 has a function of performing class classification using segmentation, on an object included in an image to be processed (hereinafter referred to as a processing target image). The processing target image is not particularly limited, but may be, for example, a radiographic image acquired in a non-destructive inspection of an industrial product. This radiographic image may include, for example, an image of a defect (flaw) caused inside the object (e.g., a metal product). For example, the image processing apparatus 10 may detect or identify a defect (flaw) included in this radiographic image by class classification.

The image processing apparatus 10 includes a central processing unit (CPU) 101, a random access memory (RAM) 102, a non-volatile memory 103, an input device 104, a display 105, and a network interface 106. These pieces of hardware are connected to a bus 107. The display 105 is, for example, a liquid crystal display or a light emitting diode (LED) display. The input device 104 includes, for example, a keyboard and a mouse, and may also include a proximity input device such as a touch panel display or an audio input device such as a microphone. The network interface 106 is an interface for connecting the image processing apparatus 10 to a network.

The non-volatile memory 103 is a non-volatile storage medium such as a hard disk or a flash memory. The non-volatile memory 103 stores an image processing program 110 and a class classification model 120. The RAM 102 is a work memory for the CPU 101 to execute processing. The CPU 101 loads the image processing program 110 stored in the non-volatile memory 103 into the RAM 102, and executes processing in accordance with the image processing program 110. The CPU 101 is an example of a "processor" in the disclosed technology.

The class classification model 120 is a mathematical model based on a CNN constructed to predict a classification label on a pixel-by-pixel basis for the processing target image. The class classification model 120 may be, for example, a model using a known encoder-decoder model (ED-CNN: Encoder-Decoder Convolutional Neural Network). The encoder-decoder model is a model made up of an encoder that extracts features from an image using a convolutional layer, and a decoder that outputs a probability map based on the extracted features. The probability map is a result of deriving, for each pixel of the processing target image, a probability of the pixel belonging to a certain class. The class classification model 120 is constructed through machine learning using, as labeled training data, a plurality of images assigned respective ground truth labels.

Fig. 2 is a functional block diagram illustrating an example of a functional configuration of the image processing apparatus 10. The CPU 101 executes the image processing program 110, so that the image processing apparatus 10 functions as an image acquisition unit 11, a division processing unit 12, a calculation processing unit 13, an integration processing unit 14, and a classification processing unit 15.

The image acquisition unit 11 acquires a processing target image. The processing target image may be, for example, downloaded from an image server (not illustrated) and stored in the non-volatile memory 103.

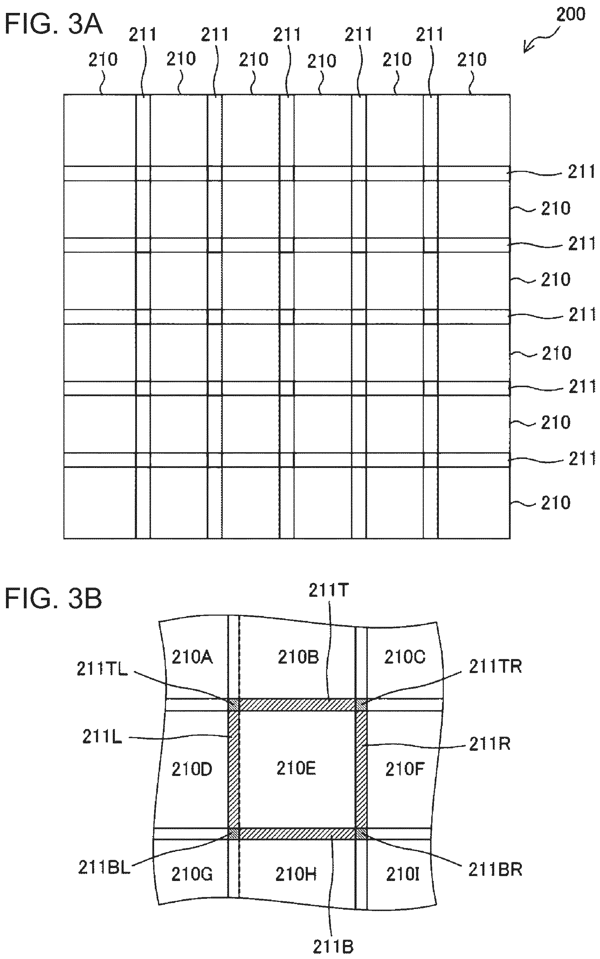

The division processing unit 12 performs division processing of dividing the processing target image acquired by the image acquisition unit 11 into a plurality of partial images. Fig. 3A is a diagram illustrating an example of a manner of the division processing. As illustrated in Fig. 3A, the division processing unit 12 divides a processing target image 200 into a plurality of partial images 210. The shape of each partial image 210 may be, for example, a square or rectangle. The size of each partial image 210 is set to a size that does not cause a shortage of computational resources including the CPU 101 and the RAM 102 when processing (calculation processing to be described later) using the class classification model 120 is executed for each partial image 210. The size of each partial image 210 may be, for example, 256 pixels × 256 pixels. For example, when the processing target image 200 is a radiographic image including an image of a defect (flaw) caused inside an object (e.g., a metal product), the size of the defect (flaw) subjected to class classification is, for example, about 1 to 10 pixels. That is, each partial image 210 may include images of a plurality of defects (flaws).

The division processing unit 12 divides the processing target image 200 such that each partial image 210 has an overlapping area 211 that overlaps another partial image 210 adjacent to the partial image 210 at an edge part of the partial image 210. Fig. 3B illustrates a partial image 210E and partial images 210A, 210B, 210C, 210D, 210F, 210G, 210H, and 210I adjacent to the partial image 210E. For example, an edge part at an upper end of the partial image 210E has an overlapping area 211T that overlaps the partial image 210B. An edge part at a right end of the partial image 210E has an overlapping area 211R that overlaps the partial image 210F. An edge part at a lower end of the partial image 210E has an overlapping area 211B that overlaps the partial image 210H. An edge part at a left end of the partial image 210E has an overlapping area 211L that overlaps the partial image 210D. An upper right corner part of the partial image 210E has an overlapping area 211TR that overlaps the partial images 210B, 210C, and 210F. A lower right corner part of the partial image 210E has an overlapping area 211BR that overlaps the partial images 210F, 210I, and 210H. A lower left corner part of the partial image 210E has an overlapping area 211BL that overlaps the partial images 210H, 210G, and 210D. An upper left corner part of the partial image 210E has an overlapping area 211TL that overlaps the partial images 210D, 210A, and 210B.

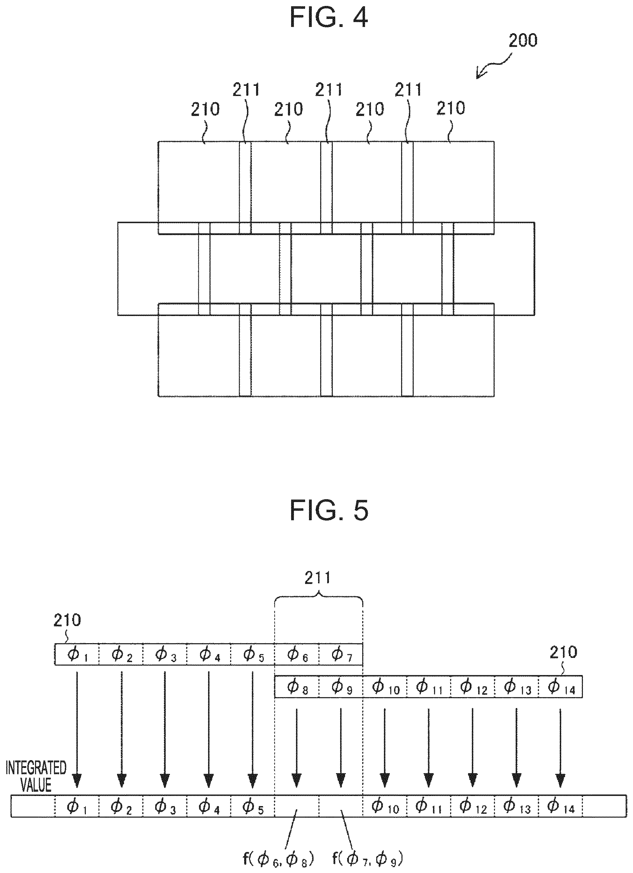

Figs. 3A and 3B illustrate a case where the division processing is performed such that the plurality of partial images 210 are arranged in a matrix pattern. However, the division processing may be performed such that the plurality of partial images 210 are arranged in a honeycomb pattern as illustrated in Fig. 4. That is, the partial images 210 may be arranged to spread over with a center-to-center distance between the partial images 210 being constant.

By using the class classification model 120, the calculation processing unit 13 performs, individually for each of the plurality of partial images 210, calculation processing of calculating numerical values for respective pixels of the partial image 210. The numerical values are for use in class classification and are each related to a probability of a corresponding pixel belonging to a specific class. Each of the "numerical values" above is a numerical value for use in estimation of the classification label to be assigned to the corresponding pixel, and may be, for example, a probability $\varphi$ of the corresponding pixel belonging to the specific class or a logit $f(\varphi)$ of the probability $\varphi$. The logit $f(\varphi)$ of the probability $\varphi$ is expressed by Expression (1) below. A case where the numerical value calculated by the calculation processing unit 13 is the probability $\varphi$ of the pixel belonging to the specific class will be described below as an example. That is, the calculation processing unit 13 generates a probability map for each of the plurality of partial images 210 using the class classification model 120.

$$f(\varphi) = log \frac{\varphi}{1 - \varphi} \quad \cdot \cdot \cdot \quad (1)$$

The integration processing unit 14 performs integration processing of integrating the probabilities $\varphi$ (probability maps) calculated for the respective pixels of the plurality of partial images 210 to achieve a size which the processing target image 200 had before the division processing. Fig. 5 is a diagram illustrating a concept of the integration processing performed by the integration processing unit 14. The integration processing unit 14 outputs the probability $\varphi$ calculated for each pixel of each of the plurality of partial images 210 as the integrated value for the pixel without any processing, in an area other than the overlapping area 211 of the partial image 210. On the other hand, the integration processing unit 14 performs arithmetic processing in which the probabilities $\varphi$ in the overlapping area 211 of the plurality of partial images 210 that form the common overlapping area 211 are an arithmetic operation target. Specifically, the integration processing unit 14 outputs a value $f(\varphi_6, \varphi_8)$ obtained by the arithmetic processing in which a probability $\varphi_6$ and a probability $\varphi_8$ in the overlapping area 211 of the two partial images 210 illustrated in Fig. 5 are an arithmetic operation target, as an integrated value of one pixel in the overlapping area 211. The integration processing unit 14 also outputs a value $f(\varphi_7, \varphi_9)$ obtained by the arithmetic processing in which a probability $\varphi_7$ and a probability $\varphi_9$ in the overlapping area 211 of the two partial images 210 illustrated in Fig. 5 are an arithmetic operation target, as an integrated value of the other pixel in the overlapping area 211. For a corner part where four partial images 210 form a common overlapping area 211 (see Fig. 3B), the arithmetic processing is performed in which the four probabilities $\varphi$ calculated for the four partial images 210 are the arithmetic operation target.

In the above-described arithmetic processing performed for the overlapping area 211, the integration processing unit 14 may perform processing of calculating a statistical value of the probabilities $\varphi$ that are the arithmetic operation target. The statistical value may be, for example, an average value, a median value, a maximum value, or a minimum value. For example, when the statistical value is the average value, in the example illustrated in Fig. 5, the integration processing unit 14 outputs the average value of the probability $\varphi_6$ and the probability $\varphi_8$ as the integrated value of the one pixel in the overlapping area 211, and outputs the average value of the probability $\varphi_7$ and the probability $\varphi_9$ as the integrated value of the other pixel in the overlapping area 211. On the other hand, when the statistical value is the maximum value, in the example illustrated in Fig. 5, the integration processing unit 14 outputs the maximum value of the probability $\varphi_6$ and the probability $\varphi_8$ as the integrated value of the one pixel in the overlapping area 211, and outputs the maximum value of the probability $\varphi_7$ and the probability $\varphi_9$ as the integrated value of the other pixel in the overlapping area 211.

In the above-described arithmetic processing performed on the overlapping area 211, the integration processing unit 14 may perform the arithmetic operation based on pixel positions, on the probabilities $\varphi$ that are the arithmetic operation target. Specifically, the integration processing unit 14 may perform processing of calculating a weighted average using weight coefficients based on the pixel positions, on the probabilities $\varphi$ that are the arithmetic operation target. In this case, it is preferable to use a weight coefficient that becomes smaller as the pixel position is closer to the edge so that the contribution rate of the probability $\varphi$ calculated for pixels close to the edge of each partial image 210 becomes relatively low.

That is, in the example illustrated in Fig. 5, let weight coefficients applied to the probabilities $\varphi_6$, $\varphi_7$, $\varphi_8$, and $\varphi_9$ in the overlapping area 211 be $w_6$, $w_7$, $w_8$, and $w_9$, respectively. Then, Expressions (2) to (5) below hold. The weighted averages $X(\varphi_6, \varphi_8)$ and
$X(\varphi_7, \varphi_9)$ are respectively expressed by Expressions (6) and (7) below.

$$w_6 > w_7 \cdots (2)$$

$$w_8 < w_9 \cdots (3)$$

$$w_6 + w_8 = 1 \cdots (4)$$

$$w_7 + w_9 = 1 \cdots (5)$$

$$X(\varphi_6, \varphi_8) = w_6 \cdot \varphi_6 + w_8 \cdot \varphi_8 \cdots (6)$$

$$X(\varphi_7, \varphi_9) = w_7 \cdot \varphi_9 + w_7 \cdot \varphi_9 \cdots (7)$$

It is preferable to set the weight coefficients such that a difference in the integrated value obtained as a result of the integration processing between the adjacent pixels falls within a predetermined range. In other words, it is preferable to set the weight coefficients so that the integrated value does not markedly differ between the adjacent pixels. Such weight coefficients can be expressed by, for example, Expressions (8) to (13) below.

$$f(P) = \Sigma w_p value(p) \quad \cdot \cdot \cdot (8)$$

$$s.t. \Sigma w_p = 1 \quad \cdot \cdot \cdot \quad (9)$$

$$if \ |pos(p)|_\infty = \frac{size}{2}, w_p = 0 \quad \cdot \cdot \cdot \quad (1\ 0)$$

$$\frac{\partial w}{\partial pos_x} > 0 \ and \ \frac{\partial w}{\partial pos_y} > 0 \quad \cdot \cdot \cdot \quad (1\ 1)$$

In Expression (8), f(P) is a processing function for the integration processing on a set P of a plurality of partial images p that form the common overlapping area 211. $w_p$ is a weight coefficient assigned to a certain pixel of the partial image p. value(p) is a processing function of the calculation processing of calculating the probability $\varphi$ for the partial image p. Expression (9) indicates that the sum of the weight coefficients is equal to 1. In Expression (10), size is a size of the partial image p. pos(p) is a function of outputting the pixel position in the partial image p in an orthogonal coordinate system. Expression (10) indicates that "0" is assigned as the weight coefficient to pixels located on the outermost periphery of the partial image p. Expression (11) indicates that the weight coefficient continuously changes in accordance with a distance of the pixel position from the edge.

Expression (12) indicates that the weight coefficient assigned to a certain pixel changes linearly in accordance with the distance of the pixel from the edge. Expression (13) indicates that the weight coefficient assigned to a certain pixel changes exponentially in accordance with the distance of the pixel from the edge.

$$w_p = \frac{\frac{size}{2} - |pos(p)|_\infty}{\Sigma_{\{p \in P\}} \frac{size}{2} - |pos(p)|_\infty} \quad \cdot \cdot \cdot \quad (1\ 2)$$

$$w_p = \frac{exp\left(\left(-\frac{size}{2} + |pos(p)|_\infty\right)^{-1}\right)}{\Sigma_{\{p \in P\}} exp\left(\left(-\frac{size}{2} + |pos(p)|_\infty\right)^{-1}\right)} \quad where \qquad if \quad |pos(p)|_\infty = \frac{size}{2}, w_p = 0 \quad \cdots (1\ 3)$$

Note that the arithmetic operation based on the pixel positions is not limited to the weighted average using the weight coefficient based on the pixel position. The integration processing unit 14 may output, as the integrated value, the probability $\varphi$ calculated for the pixel farthest from the edge among the probabilities $\varphi$ that are the arithmetic operation target. For example, in the example illustrated in Fig. 5, the integration processing unit 14 may output the probability $\varphi_6$ calculated for the pixel farther from the edge out of the probability $\varphi_6$ and the probability $\varphi_8$, as the integrated value of the one pixel in the overlapping area 211. The integration processing unit 14 may output the probability $\varphi_9$ calculated for the pixel farther from the edge out of the probability $\varphi_7$ and the probability $\varphi_9$, as the integrated value of the other pixel in the overlapping area 211.

The classification processing unit 15 performs class classification on each pixel of the processing target image 200, based on the integrated value of the probability $\varphi$ obtained by the integration processing. That is, the classification processing unit 15 estimates, for each pixel of the processing target image 200, a class to which the pixel belongs based on the integrated value of the probability $\varphi$, and assigns a classification label corresponding to the estimated class to the pixel. The classification processing unit 15 may perform the class classification using, for example, an Argmax function. Alternatively, the classification processing unit 15 may perform the class classification using, for example, a threshold value. Note that the classification processing unit 15 may be implemented in an image processing apparatus different from the image processing apparatus 10. In this case, the image processing apparatus 10 does not need to perform the classification processing.

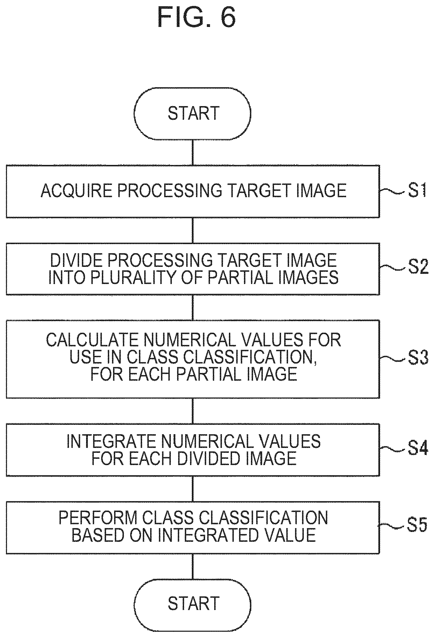

Fig. 6 is a flowchart illustrating an example of a flow of image processing performed as a result of the CPU 101 executing the image processing program 110. The image processing program 110 is executed, for example, when a user instructs to start the processing by operating the input device 104.

In step S1, the image acquisition unit 11 acquires the processing target image 200. In step S2, the division processing unit 12 performs the division processing of dividing the processing target image 200 acquired in step S1 into the plurality of partial images 210. The division processing unit 12 divides the processing target image 200 such that each partial image 210 has an overlapping area 211 that overlaps another partial image 210 adjacent to the partial image 210 at an edge part of the partial image 210.

In step S3, by using the class classification model 120, the calculation processing unit 13 performs, individually for each of the plurality of partial images 210, calculation processing of calculating numerical values for respective pixels of the partial image 210. The numerical values are for use in class classification and are each related to a probability of a corresponding pixel belonging to a specific class. Each of the "numerical values" above may be, for example, the probability $\varphi$ of the corresponding pixel belonging to the specific class or a logit $f(\varphi)$ of the probability $\varphi$.

In step S4, the integration processing unit 14 performs the integration processing of integrating the probabilities $\varphi$ (probability maps) individually calculated for the plurality of partial images 210 to achieve a size which the processing target image 200 had before the division processing. The integration processing unit 14 outputs the probability $\varphi$ calculated for each pixel of each of the plurality of partial images 210 as the integrated value for the pixel without any processing, in an area other than the overlapping area 211 of the partial image 210. On the other hand, the integration processing unit 14 performs arithmetic processing in which the probabilities $\varphi$ in the overlapping area 211 of the plurality of partial images 210 that form the common overlapping area 211 are an arithmetic operation target.

In step S5, the classification processing unit 15 performs the class classification for each pixel of the processing target image, based on the integrated value obtained by the integration processing in step S4. That is, the classification processing unit 15 estimates, for each pixel of the processing target image 200, a class to which the pixel belongs based on the integrated value of the probability $\varphi$, and assigns a classification label corresponding to the estimated class to the pixel. The classification processing unit 15 may perform the class classification using, for example, an Argmax function. Alternatively, the classification processing unit 15 may perform the class classification using, for example, a threshold value.

As described above, the image processing apparatus 10 according to the embodiment of the disclosed technology performs division processing of dividing the processing target image 200 into the plurality of partial images 210. The division processing is processing of dividing the processing target image 200 such that each of the plurality of partial images 210 has an overlapping area 211 that overlaps another partial image adjacent to the partial image 210 at an edge part of the partial image 210. The image processing apparatus 10 performs, individually for each of the plurality of partial images 210, calculation processing of calculating numerical values for respective pixels of the partial image 210. The numerical values are for use in class classification and each are related to a probability of a corresponding pixel among the pixels belonging to a specific class. The image processing apparatus 10 performs integration processing of integrating the numerical values individually calculated for the plurality of partial images 210 to achieve a size which the processing target image 200 had before the division processing. The image processing apparatus 10 performs, in the integration processing, arithmetic processing in which the numerical values in a common overlapping area of a plurality of partial images 210 that form the common overlapping area are an arithmetic operation target. The image processing apparatus 10 performs class classification on the processing target image 200, based on an integrated value obtained by integrating the numerical values in the integration processing.

Segmentation, known as an image recognition technique, can be implemented using a CNN. When the size of an image input to the CNN is excessively large, computational resources such as a memory may be insufficient. Therefore, a method of dividing an image into a plurality of partial images, performing segmentation for each of the partial images, and integrating the respective results is conceivable.

On the other hand, in segmentation using the CNN, the classification accuracy tends to be lower in the vicinity of an edge part of an image than in a central part of the image. This is because class classification is performed by taking surrounding pixels of a target pixel into consideration. To avoid this issue, it is conceivable to perform image division such that each partial image has an overlapping area that overlaps another partial image adjacent to the partial image at an edge part, and for the overlapping area of the partial images, perform class classification using a classification label (e.g., "0" or "1") obtained for each of the plurality of partial images that form the overlapping area. That is, the classification labels individually obtained for the plurality of partial images are integrated to achieve a size of the original image. With this approach, processing of merely selectively using one of the classification labels individually obtained for the plurality of partial images that form the overlapping area can be performed for the overlapping area. Thus, the effect of improving the accuracy of class classification in the vicinity of the edge part of the image is limited. As a result, in a label map obtained by integrating the segmentation results of the respective partial images, a low-accuracy region appears in the vicinity of boundaries between the partial images, resulting in an inaccurate and unnatural outcome. That is, with the method of integrating the classification labels individually obtained for the plurality of partial images to achieve the size of the original image, obtaining accurate and natural segmentation results may be difficult because of an insufficient information amount of the classification labels.

In the image processing apparatus 10 according to the embodiment of the disclosed technology, numerical values such as the probabilities $\varphi$ individually calculated for the plurality of partial images 210 are subjected to the integration processing. This enables more advanced arithmetic processing to be performed in the integration processing than in the case of integrating the classification labels, and thus can increase the accuracy of class classification in the overlapping area 211. As described above, in segmentation using the CNN, the classification accuracy tends to be lower in the vicinity of an edge part of an image than in a central part of the image. The image processing apparatus 10 performs an arithmetic operation based on the pixel positions in the arithmetic processing of the integration processing, and thus can address the issue of decreased accuracy in class classification in the vicinity of the edge part of the image.

In the above-described embodiment, various processors as described below can be used as the hardware structure of the processing units that execute various kinds of processing, such as the image acquisition unit 11, the division processing unit 12, the calculation processing unit 13, the integration processing unit 14, and the classification processing unit 15, for example. As described above, the various processors include, in addition to a CPU and a GPU, which are general-purpose processors that execute software (program) to function as the various processing units, a programmable logic device (PLD) such as a field programable gate array (FPGA) whose circuit configuration can be changed after manufacturing, and a dedicated electric circuit, such as an application-specific integrated circuit (ASIC), which is a processor having a circuit configuration specifically designed for executing specific processing.

A single processing unit may be constituted by one of these various processors, or by a combination of two or more processors of the same type or different types (e.g., a combination of a plurality of FPGAs or a combination of a CPU and an FPGA). Additionally, a plurality of processing units may be constituted by a single processor.

As an example in which a plurality of processing units is constituted by a single processor, firstly, as represented by computers such as a client and a server, there is a form where the single processor is constituted by a combination of one or more CPUs and software, and this processor functions as the plurality of processing units. Secondly, as represented by System on Chip (SoC) or the like, there is a form where a processor that implements the functions of the entire system, including the plurality of processing units, on a single integrated circuit (IC) chip is used. In this way, the various processing units are constituted using one or more of the various processors in terms of the hardware structure.

Furthermore, as a hardware structure of these various processors, more specifically, an electrical circuit (circuitry) in which circuit elements such as semiconductor elements are combined can be used.

In the above-described embodiment, the image processing program 110 is described as being pre-stored (installed) in the non-volatile memory 103. However, the configuration is not limited to this. The image processing program 110 may be provided in a form of being recorded on recording media such as a compact disc read-only memory (CD-ROM), a digital versatile disc read-only memory (DVD-ROM), and a Universal Serial Bus (USB) memory. Additionally, the image processing program 110 may be downloaded from an external apparatus via a network. That is, the program (i.e., program product) described in the present embodiment may be provided not only as a recording medium but also by being distributed from an external computer.

Appendices below are further disclosed in relation to the embodiment above.

(Appendix 1)

An image processing apparatus including:
at least one processor configured to:

perform division processing of dividing an image into a plurality of partial images, the division processing being processing of dividing the image such that each of the plurality of partial images has an overlapping area that overlaps another partial image adjacent to the partial image at an edge part of the partial image;
perform, individually for each of the plurality of partial images, calculation processing of calculating numerical values for respective pixels of the partial image, the numerical values being for use in class classification and each being related to a probability of a corresponding pixel among the pixels belonging to a specific class; and
perform integration processing of integrating the numerical values individually calculated for the plurality of partial images to achieve a size which the image had before the division processing.

(Appendix 2)

The image processing apparatus according to appendix 1, wherein each of the numerical values is the probability of the corresponding pixel belonging to the specific class or a logit of the probability.

(Appendix 3)

The image processing apparatus according to appendix 1 or 2, wherein the at least one processor is configured to perform, in the integration processing, arithmetic processing in which the numerical values in a common overlapping area of a plurality of partial images that form the common overlapping area are an arithmetic operation target.

(Appendix 4)

The image processing apparatus according to appendix 3, wherein the at least one processor is configured to perform processing of calculating a statistical value of the numerical values that are the arithmetic operation target.

(Appendix 5)

The image processing apparatus according to appendix 3, wherein the at least one processor is configured to perform an arithmetic operation based on pixel positions, on the numerical values that are the arithmetic operation target.

(Appendix 6)

The image processing apparatus according to appendix 5, wherein the at least one processor is configured to perform processing of calculating a weighted average using weight coefficients based on the pixel positions, on the numerical values that are the arithmetic operation target.

(Appendix 7)

The image processing apparatus according to any one of appendices 1 to 6, wherein the at least one processor is configured to perform the class classification on the image, based on an integrated value obtained by integrating the numerical values in the integration processing.

(Appendix 8)

The image processing apparatus according to appendix 7, wherein the at least one processor is configured to perform the class classification using an Argmax function or a threshold value, based on the integrated value.

(Appendix 9)

An image processing method to be executed by at least one processor which an image processing apparatus has, the image processing method including:

performing division processing of dividing an image into a plurality of partial images, the division processing being processing of dividing the image such that each of the plurality of partial images has an overlapping area that overlaps another partial image adjacent to the partial image at an edge part of the partial image;

performing, individually for each of the plurality of partial images, calculation processing of calculating numerical values for respective pixels of the partial image, the numerical values being for use in class classification and each indicating a probability of a corresponding pixel among the pixels belonging to a specific class;

performing, individually for each of the plurality of partial images, calculation processing of calculating numerical values for respective pixels of the partial image, the numerical values being for use in class classification and each being related to a probability of a corresponding pixel among the pixels belonging to a specific class; and

performing integration processing of integrating the numerical values individually calculated for the plurality of partial images to achieve a size which the image had before the division processing.

(Appendix 10)

A program for causing at least one processor which an image processing apparatus has to execute:

division processing of dividing an image into a plurality of partial images, the division processing being processing of dividing the image such that each of the plurality of partial images has an overlapping area that overlaps another partial image adjacent to the partial image at an edge part of the partial image;

individually for each of the plurality of partial images, calculation processing of calculating numerical values for respective pixels of the partial image, the numerical values being for use in class classification and each indicating a probability of a corresponding pixel among the pixels belonging to a specific class; and

integration processing of integrating the numerical values individually calculated for the plurality of partial images to achieve a size which the image had before the division processing.

The disclosure of JP2022-153069 filed on September 26, 2022 is incorporated herein by reference in its entirety. All documents, patent applications, and technical standards described herein are incorporated herein by reference to the same extent as if incorporation of each of the documents, patent applications, or technical standards herein by reference was presented specifically and individually.

**Claims**

1.  An image processing apparatus comprising:
    at least one processor configured to:

    perform division processing of dividing an image into a plurality of partial images, the division processing being processing of dividing the image such that each of the plurality of partial images has an overlapping area that overlaps another partial image adjacent to the partial image at an edge part of the partial image;

    perform, individually for each of the plurality of partial images, calculation processing of calculating numerical values for respective pixels of the partial image, the numerical values being for use in class classification and each being related to a probability of a corresponding pixel among the pixels belonging to a specific class; and

    perform integration processing of integrating the numerical values individually calculated for the plurality of partial images to achieve a size which the image had before the division processing.

2.  The image processing apparatus according to claim 1, wherein each of the numerical values is the probability of the corresponding pixel belonging to the specific class or a logit of the probability.

3.  The image processing apparatus according to claim 2, wherein the at least one processor is configured to perform, in the integration processing, arithmetic processing in which the numerical values in a common overlapping area of a plurality of partial images that form the common overlapping area are an arithmetic operation target.

4.  The image processing apparatus according to claim 3, wherein the at least one processor is configured to perform processing of calculating a statistical value of the numerical values that are the arithmetic operation target.

5.  The image processing apparatus according to claim 3, wherein the at least one processor is configured to perform an arithmetic operation based on pixel positions, on the numerical values that are the arithmetic operation target.

6. The image processing apparatus according to claim 5, wherein the at least one processor is configured to perform processing of calculating a weighted average using weight coefficients based on the pixel positions, on the numerical values that are the arithmetic operation target.

7. The image processing apparatus according to any one of claims 1 to 6, wherein the at least one processor is configured to perform the class classification on the image, based on an integrated value obtained by integrating the numerical values in the integration processing.

8. The image processing apparatus according to claim 7, wherein the at least one processor is configured to perform the class classification using an Argmax function or a threshold value, based on the integrated value.

9. An image processing method to be executed by at least one processor which an image processing apparatus has, the image processing method comprising:

   performing division processing of dividing an image into a plurality of partial images, the division processing being processing of dividing the image such that each of the plurality of partial images has an overlapping area that overlaps another partial image adjacent to the partial image at an edge part of the partial image;
   performing, individually for each of the plurality of partial images, calculation processing of calculating numerical values for respective pixels of the partial image, the numerical values being for use in class classification and each indicating a probability of a corresponding pixel among the pixels belonging to a specific class;
   performing, individually for each of the plurality of partial images, calculation processing of calculating numerical values for respective pixels of the partial image, the numerical values being for use in class classification and each being related to a probability of a corresponding pixel among the pixels belonging to a specific class; and
   performing integration processing of integrating the numerical values individually calculated for the plurality of partial images to achieve a size which the image had before the division processing.

10. A program for causing at least one processor which an image processing apparatus has to execute:

    division processing of dividing an image into a plurality of partial images, the division processing being processing of dividing the image such that each of the plurality of partial images has an overlapping area that overlaps another partial image adjacent to the partial image at an edge part of the partial image;
    individually for each of the plurality of partial images, calculation processing of calculating numerical values for respective pixels of the partial image, the numerical values being for use in class classification and each indicating a probability of a corresponding pixel among the pixels belonging to a specific class; and
    integration processing of integrating the numerical values individually calculated for the plurality of partial images to achieve a size which the image had before the division processing.

**Amended claims under Art. 19.1 PCT**

1. An image processing apparatus comprising:
   at least one processor configured to:

   perform division processing of dividing an image into a plurality of partial images, the division processing being processing of dividing the image such that each of the plurality of partial images has an overlapping area that overlaps another partial image adjacent to the partial image at an edge part of the partial image;
   perform, individually for each of the plurality of partial images, calculation processing of calculating numerical values for respective pixels of the partial image, the numerical values being for use in class classification and each being related to a probability of a corresponding pixel among the pixels belonging to a specific class; and
   perform integration processing of integrating the numerical values individually calculated for the plurality of partial images to achieve a size which the image had before the division processing.

2. The image processing apparatus according to claim 1, wherein each of the numerical values is the probability of the corresponding pixel belonging to the specific class or a logit of the probability.

3. The image processing apparatus according to claim 2, wherein the at least one processor is configured to perform, in the integration processing, arithmetic processing in which the numerical values in a common overlapping area of a plurality of partial images that form the common overlapping area are an arithmetic operation target.

4. The image processing apparatus according to claim 3, wherein the at least one processor is configured to perform processing of calculating a statistical value of the numerical values that are the arithmetic operation target.

5. The image processing apparatus according to claim 3, wherein the at least one processor is configured to perform an arithmetic operation based on pixel positions, on the numerical values that are the arithmetic operation target.

6. The image processing apparatus according to claim 5, wherein the at least one processor is configured to perform processing of calculating a weighted average using weight coefficients based on the pixel positions, on the numerical values that are the arithmetic operation target.

7. The image processing apparatus according to any one of claims 1 to 6, wherein the at least one processor is configured to perform the class classification on the image, based on an integrated value obtained by integrating the numerical values in the integration processing.

8. The image processing apparatus according to claim 7, wherein the at least one processor is configured to perform the class classification using an Argmax function or a threshold value, based on the integrated value.

9. An image processing method to be executed by at least one processor which an image processing apparatus has, the image processing method comprising:

   performing division processing of dividing an image into a plurality of partial images, the division processing being processing of dividing the image such that each of the plurality of partial images has an overlapping area that overlaps another partial image adjacent to the partial image at an edge part of the partial image;
   performing, individually for each of the plurality of partial images, calculation processing of calculating numerical values for respective pixels of the partial image, the numerical values being for use in class classification and each indicating a probability of a corresponding pixel among the pixels belonging to a specific class;
   performing, individually for each of the plurality of partial images, calculation processing of calculating numerical values for respective pixels of the partial image, the numerical values being for use in class classification and each being related to a probability of a corresponding pixel among the pixels belonging to a specific class; and
   performing integration processing of integrating the numerical values individually calculated for the plurality of partial images to achieve a size which the image had before the division processing.

10. A program for causing at least one processor which an image processing apparatus has to execute:

   division processing of dividing an image into a plurality of partial images, the division processing being processing of dividing the image such that each of the plurality of partial images has an overlapping area that overlaps another partial image adjacent to the partial image at an edge part of the partial image;
   individually for each of the plurality of partial images, calculation processing of calculating numerical values for respective pixels of the partial image, the numerical values being for use in class classification and each indicating a probability of a corresponding pixel among the pixels belonging to a specific class; and
   integration processing of integrating the numerical values individually calculated for the plurality of partial images to achieve a size which the image had before the division processing.

11. (New) The image processing apparatus according to claim 2, wherein the at least one processor is configured to output in the integration processing, the numerical values calculated for each pixel of each of the plurality of partial images as the integrated value for the pixel without any processing, in an area other than the overlapping area of the partial image.

# FIG. 1

10

| 101 | 102 | 106 |
|---|---|---|
| CPU | RAM | NETWORK I/F |

107

| NON-VOLATILE MEMORY | DISPLAY | INPUT DEVICE |
|---|---|---|

110 — IMAGE PROCESSING PROGRAM

120 — CLASS CLASSIFICATION MODEL

105

104

103

# FIG. 2

10

## INFORMATION PROCESSING APPARATUS

| IMAGE ACQUISITION UNIT | — 11 |
|---|---|
| DIVISION PROCESSING UNIT | — 12 |
| CALCULATION PROCESSING UNIT | — 13 |
| INTEGRATION PROCESSING UNIT | — 14 |
| CLASSIFICATION PROCESSING UNIT | — 15 |

FIG. 3A

210  211  210  211  210  211  210  211  210  211  210  200

211
210
211
210
211
210
211
210
211
210

FIG. 3B

211T

211TL  210A  210B  210C  211TR

211L  210D  210E  210F  211R

211BL  210G  210H  210I  211BR

211B

# FIG. 4

# FIG. 5

$f(\phi_6, \phi_8)$    $f(\phi_7, \phi_9)$

# FIG. 6

```
              ┌─────────────┐
              │    START    │
              └─────────────┘
                     │
    ┌──────────────────────────────────────┐
    │   ACQUIRE PROCESSING TARGET IMAGE     │ ～S1
    └──────────────────────────────────────┘
                     │
    ┌──────────────────────────────────────┐
    │     DIVIDE PROCESSING TARGET IMAGE    │ ～S2
    │     INTO PLURALITY OF PARTIAL IMAGES  │
    └──────────────────────────────────────┘
                     │
    ┌──────────────────────────────────────┐
    │    CALCULATE NUMERICAL VALUES FOR     │
    │      USE IN CLASS CLASSIFICATION,     │ ～S3
    │         FOR EACH PARTIAL IMAGE        │
    └──────────────────────────────────────┘
                     │
    ┌──────────────────────────────────────┐
    │       INTEGRATE NUMERICAL VALUES      │ ～S4
    │          FOR EACH DIVIDED IMAGE       │
    └──────────────────────────────────────┘
                     │
    ┌──────────────────────────────────────┐
    │      PERFORM CLASS CLASSIFICATION     │ ～S5
    │        BASED ON INTEGRATED VALUE      │
    └──────────────────────────────────────┘
                     │
              ┌─────────────┐
              │    START    │
              └─────────────┘
```

16

## INTERNATIONAL SEARCH REPORT

<table>
<tr><td>International application No.<br><br>**PCT/JP2023/033223**</td></tr>
</table>

**A. CLASSIFICATION OF SUBJECT MATTER**

**G06T 7/143**(2017.01)i; **G06V 10/764**(2022.01)i
FI:  G06T7/143; G06V10/764

According to International Patent Classification (IPC) or to both national classification and IPC

**B. FIELDS SEARCHED**

Minimum documentation searched (classification system followed by classification symbols)

G06T7/143; G06V10/764

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/128105 A1 (HUAWEI TECHNOLOGIES CO., LTD.) 23 June 2022 (2022-06-23)<br>p. 9, lines 16-28, p. 27, lines 28-33, p. 55, lines 13-19, p. 57, lines 12-25, fig. 20 | 1-10 |
| A | WO 2021/117363 A1 (KONICA MINOLTA, INC.) 17 June 2021 (2021-06-17)<br>entire text, all drawings | 1-10 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033223**

| Patent document cited in search report | | | Publication date (day/month/year) | Patent family member(s) | | | Publication date (day/month/year) |
|---|---|---|---|---|---|---|---|
| WO | 2022/128105 | A1 | 23 June 2022 | JP | 2023-547941 | A | |
| | | | | paragraphs [0058], [0138], [0258], [0269], fig. 20 | | | |
| WO | 2021/117363 | A1 | 17 June 2021 | US | 2023/0009925 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020016928 A
- JP 2021149473 A
- JP 2020160997 A
- JP 2022153069 A